# EUROPEAN PATENT APPLICATION

(11) **EP 4 818 815 A1**
(43) Date of publication of application: **07.10.2026**
(21) Application number: 26167445.1
(22) Date of filing: 25.03.2026
(51) Int. Cl.: G03G 15/00, G03G 21/16

(54) **IMAGE FORMING APPARATUS AND MOTOR CONTROL METHOD**

(30) Priority: 31.03.2025 JP 2025058551
(71) Applicant: KYOCERA Document Solutions Inc., Osaka-shi, Osaka 540-8585 (JP)
(72) Inventor: Mochizuki, Masayuki, Osaka-shi, 540-8585 (JP); Kusuda, Hayato, Osaka-shi, 540-8585 (JP); Aritsuki, Takuya, Osaka-shi, 540-8585 (JP)
(74) Representative: Plougmann Vingtoft a/s

(57) **Abstract**

An image forming apparatus includes a motor, a drive control portion, a first operating portion, and a second operating portion. The drive control portion drives the motor so as to be capable of making a switch between a rotation in a first rotation direction and a rotation in a second rotation direction. The first operating portion conveys, at a time the motor is rotating in the first rotation direction, a sheet along a conveying path in an image forming process for forming an image on the sheet. The second operating portion conveys, at a time the motor is rotating in the second rotation direction, the sheet that has been inserted from a manual sheet feed port to the conveying path.

## Description

### INCORPORATION BY REFERENCE

This application is based upon and claims the benefit of priority from the corresponding Japanese Patent Application No. 2025-058551 filed on March 31, 2025, the entire contents of which are incorporated herein by reference.

### BACKGROUND

The present disclosure relates to an image forming apparatus and a motor control method.

As the related art, there is known an image forming apparatus in which paper is fed from a sheet feed tray to conveying rollers, and the conveying rollers feed the paper to an image forming portion so that an image is formed on the paper. This image forming apparatus has a function of feeding manually-fed paper inserted into a sheet feed port to the conveying rollers by a manual sheet feed roller.

### SUMMARY

An image forming apparatus according to an aspect of the present disclosure includes a motor, a drive control portion, a first operating portion, and a second operating portion. The drive control portion drives the motor so as to be capable of making a switch between a rotation in a first rotation direction and a rotation in a second rotation direction. The first operating portion conveys, at a time the motor is rotating in the first rotation direction, a sheet along a conveying path in an image forming process for forming an image on the sheet. The second operating portion conveys, at a time the motor is rotating in the second rotation direction, the sheet that has been inserted from a manual sheet feed port to the conveying path.

A motor control method according to another aspect of the present disclosure is a control method for a motor, including driving the motor so as to be capable of making a switch between a rotation in a first rotation direction and a rotation in a second rotation direction. The motor control method includes conveying, at a time the motor is rotating in the first rotation direction, a sheet along a conveying path in an image forming process for forming an image on the sheet. The motor control method includes conveying, at a time the motor is rotating in the second rotation direction, the sheet that has been inserted from a manual sheet feed port to the conveying path.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a schematic cross-sectional view showing a configuration of an image forming apparatus according to an embodiment;
Fig. 2 is a schematic diagram showing a case where each roller rotates in a first rotation direction in the image forming apparatus according to the embodiment;
Fig. 3 is a schematic diagram showing a case where each roller rotates in a second rotation direction in the image forming apparatus according to the embodiment;
Fig. 4 is a schematic block diagram showing the configuration of the image forming apparatus according to the embodiment;
Fig. 5 is a flowchart showing a first operation example of the image forming apparatus according to the embodiment; and
Fig. 6 is a flowchart showing a second operation example of the image forming apparatus according to the embodiment.

### DETAILED DESCRIPTION

### (Embodiment)

Hereinafter, an embodiment of the present disclosure will be described with reference to the attached drawings. It is noted that the following embodiment is an example of embodying the present disclosure and does not limit the technical scope of the present disclosure.

### [1] Image forming apparatus

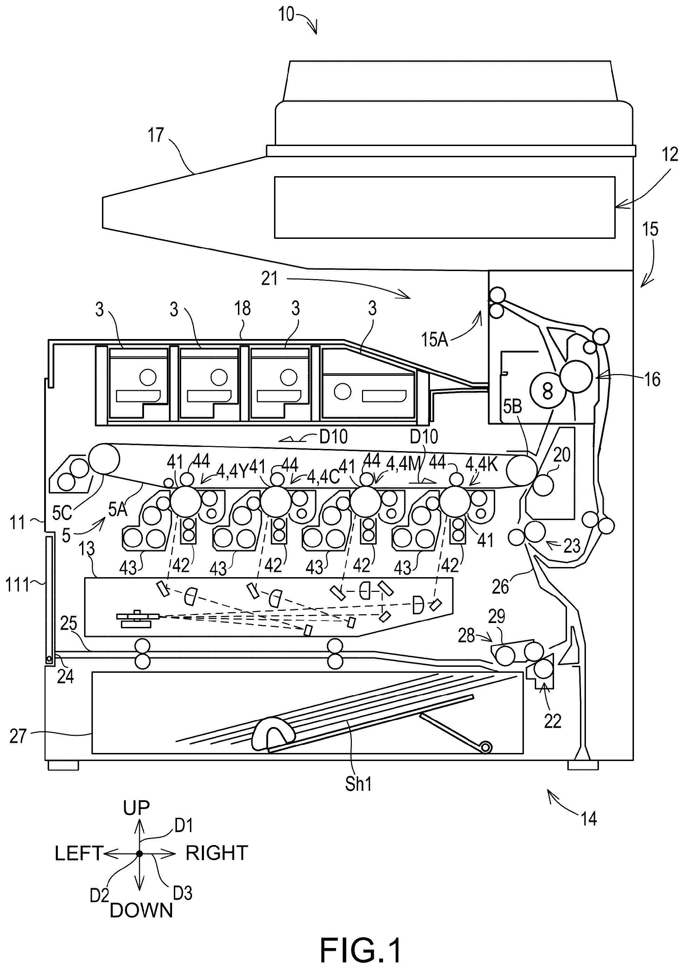

First, an overall configuration of an image forming apparatus 10 according to the present embodiment will be described with reference to Fig. 1 to Fig. 3. In descriptions below, an up-down direction D1, a front-rear direction D2, and a left-right direction D3 are defined using a state where the image forming apparatus 10 is usably installed (the state shown in Fig. 1) as a reference.

As shown in Fig. 1, the image forming apparatus 10 is a multifunction peripheral that is capable of printing an image on a sheet Sh1 such as printing paper, and has various functions such as a printing function, a copying function, a facsimile function, and a scanning function. In the present embodiment, the image forming apparatus 10 further has a double-sided printing function for printing images on both surfaces of the sheet Sh1. It is noted that the image forming apparatus 10 is not limited to a multifunction peripheral and only needs to be a device that has a printing function for printing an image on the conveyed sheet Sh1, the examples of which include a printer, a copying machine, a facsimile apparatus, and the like.

The image forming apparatus 10 includes an image reading portion 12 and an image forming portion 14. The image reading portion 12 is a portion that performs processing of reading an image of a document sheet, and is provided at an upper portion of the image forming apparatus 10. The image forming portion 14 is a portion that performs processing of forming a monochrome image or a color image based on electrophotography, and is provided at a lower portion of the image forming apparatus 10. In addition, a sheet discharge portion 15 is provided on the right side of the image forming portion 14.

A discharge space 21 is provided above the image forming portion 14. The sheet discharge portion 15 forms the discharge space 21 between the image forming portion 14 and the image reading portion 12, and vertically connects the image forming portion 14 and the image reading portion 12.

The sheet discharge portion 15 discharges the sheet Sh1 after image formation to the discharge space 21. A sheet discharge port 15A is formed on a left side surface of the sheet discharge portion 15 on the discharge space 21 side. Then, the sheet Sh1 is discharged from the sheet discharge port 15A.

The image forming portion 14 includes a housing 11 as an apparatus main body. Elements constituting the image forming portion 14 are provided inside the housing 11. The housing 11 includes an exterior frame that covers the entire image forming portion 14 and an internal frame for supporting the respective portions constituting the image forming portion 14.

A cover 111 for opening the inside of the housing 11 is provided on the front of the housing 11. The cover 111 is rotatably supported by a support shaft (not shown) that is provided at a lower end portion of an opening on the front surface of the housing 11 and extends in the front-rear direction D2.

In a state where the cover 111 is opened, a sheet feed port 24 provided on the front surface of the housing 11 is exposed to the outside of the housing 11. The sheet feed port 24 is used when a user manually inserts the sheets Sh1 one by one into the housing 11. Hereinafter, the sheets Sh1 inserted from the sheet feed port 24 will also be referred to as "manually-fed paper".

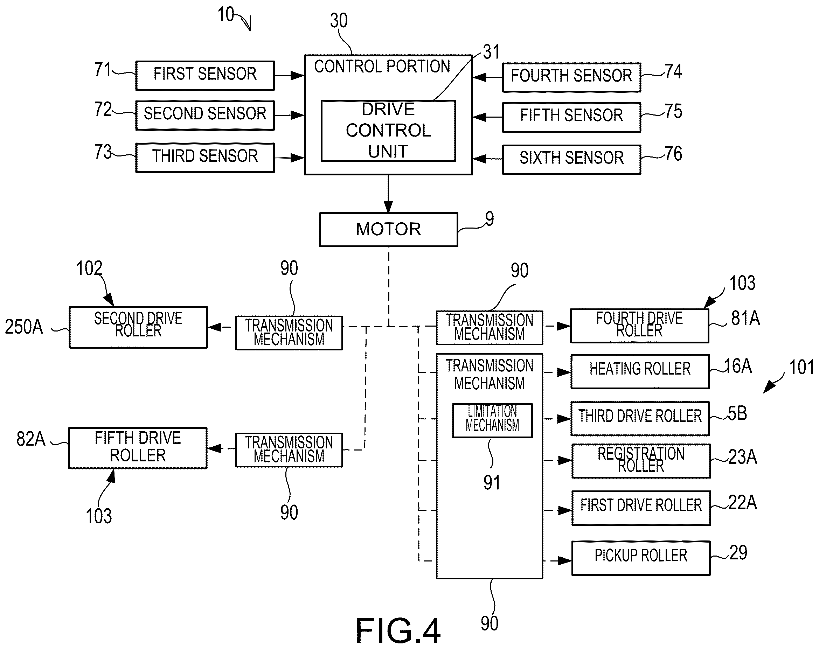

The image forming portion 14 forms a monochrome image or a color image on the sheet Sh1 such as printing paper based on a so-called tandem system. As shown in Fig. 1, the image forming portion 14 includes a plurality of image forming units 4, an intermediate transfer unit 5, a laser scanning unit 13, a secondary transfer roller 20, a fixing device 16, a sheet tray 18, a sheet storing portion 27, and a feed unit 28. The image forming portion 14 also includes an operation display portion 17, a manual conveying path 25, a sheet conveying path 26 (hereinafter, will be referred to as a "conveying path 26"), a sheet correction unit 23, toner containers 3, and a control portion 30 (see Fig. 4). The image forming portion 14 further includes a discharge roller pair 81, two double-sided printing feed roller pairs 82, a double-sided printing conveying path 83, and the like.

The conveying path 26 is a guide path that guides the sheet Sh1 fed by a feed roller pair 22 to the sheet discharge port 15A. The conveying path 26 curves upwardly from the feed roller pair 22, then extends upwardly, and reaches the sheet discharge port 15A via the secondary transfer roller 20.

The sheet storing portion 27 is provided at a bottommost portion of the image forming apparatus 10. The sheet storing portion 27 is a portion that stores the sheets Sh1 onto which images are to be transferred by the image forming units 4, and is formed in, for example, a shape of a tray that is opened upwardly. The sheet storing portion 27 is supported by the housing 11.

The feed unit 28 takes out the plurality of sheets Sh1 stacked in the sheet storing portion 27 one by one and feeds the sheets Sh1 toward the conveying path 26. The feed unit 28 includes a pickup roller 29 and the feed roller pair 22. The pickup roller 29 and the feed roller pair 22 are provided above a right side portion of the sheet storing portion 27.

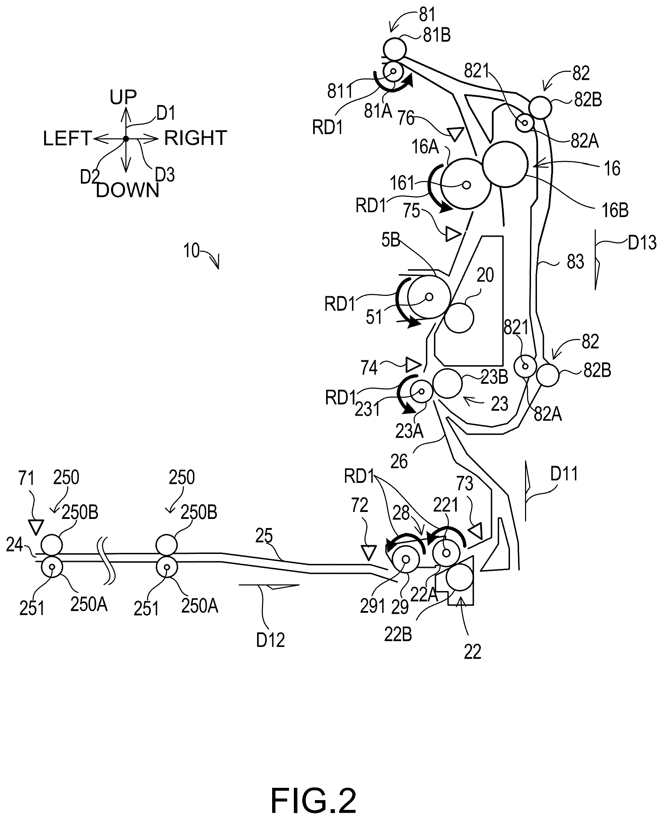

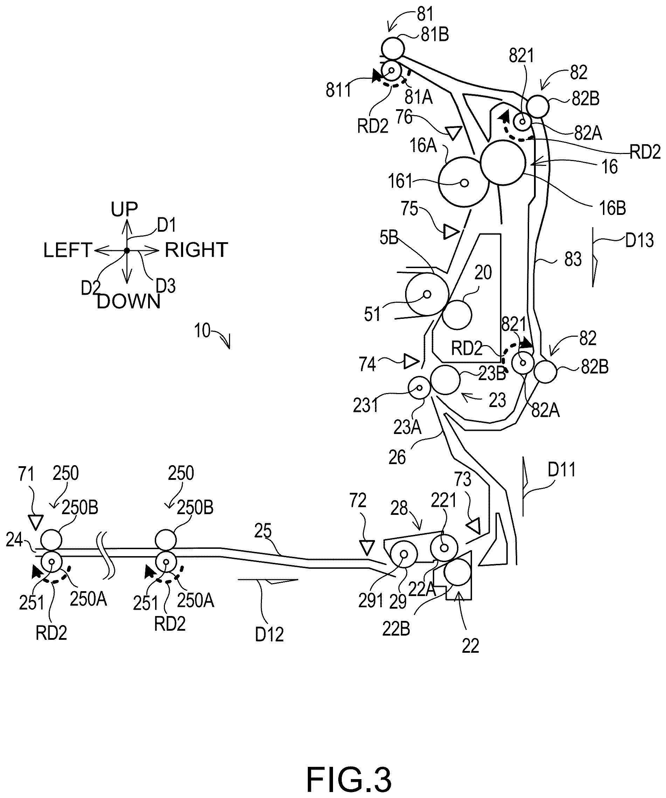

Specifically, as shown in Fig. 2 and Fig. 3, the feed roller pair 22 receives a driving force from the motor 9 (see Fig. 4) to convey the sheet Sh1 toward a downstream side of a conveying direction D11. The feed roller pair 22 includes a first drive roller 22A that rotates when the driving force from the motor 9 is transmitted thereto, and a first driven roller 22B that comes into contact with the first drive roller 22A to be rotated accordingly.

The first drive roller 22A is fixed to a rotation shaft 221 extending in the front-rear direction D2, and this rotation shaft 221 is rotatably supported by the internal frame of the housing 11. The driving force from the motor 9 is transmitted to the rotation shaft 221. The driving force of the motor 9 is transmitted to the rotation shaft 221 via a transmission mechanism 90 such as a gear or a belt (see Fig. 4).

The first driven roller 22B is biased by a predetermined elastic force toward the first drive roller 22A side by a spring (not shown). Specifically, a bearing portion (not shown) that supports a rotation shaft (not shown) of the first driven roller 22B is biased by the spring. Thus, the first driven roller 22B comes into contact with the first drive roller 22A while applying a predetermined pressure. When the first drive roller 22A is rotationally driven in this state, the first driven roller 22B is driven.

The pickup roller 29 receives the driving force from the motor 9 to take out the sheets Sh1 stored in the sheet storing portion 27 one by one and convey the sheets Sh1 to the feed roller pair 22. The pickup roller 29 also receives the driving force from the motor 9 to convey the sheet Sh1 conveyed from the manual conveying path 25 to the feed roller pair 22. The feed roller pair 22 then receives the driving force from the motor 9 to convey the sheet Sh1 conveyed from the pickup roller 29 to the conveying path 26.

The manual conveying path 25 is a guide path that guides the sheet Sh1 inserted into the sheet feed port 24 (manually-fed paper) to the pickup roller 29. The manual conveying path 25 extends rightward from the sheet feed port 24 and reaches the pickup roller 29 via two manual feed roller pairs 250.

As shown in Fig. 2 and Fig. 3, each of the two manual feed roller pairs 250 receives a driving force from the motor 9 (see Fig. 4) to convey the sheet Sh1 inserted into the sheet feed port 24 toward the downstream side of the conveying direction D12. Each of the two manual feed roller pairs 250 includes a second drive roller 250A that rotates when the driving force from the motor 9 is transmitted thereto, and a second driven roller 250B that comes into contact with the second drive roller 250A to be rotated accordingly.

The second drive roller 250A is fixed to a rotation shaft 251 extending in the front-rear direction D2, and this rotation shaft 251 is rotatably supported by the internal frame of the housing 11. A driving force from the motor 9 is transmitted to the rotation shaft 251. The driving force of the motor 9 is transmitted to the rotation shaft 251 via the transmission mechanism 90 such as a gear or a belt.

The second driven roller 250B is biased by a predetermined elastic force toward the second drive roller 250A side by a spring (not shown). Specifically, a bearing portion (not shown) that supports a rotation shaft (not shown) of the second driven roller 250B is biased by the spring. Thus, the second driven roller 250B comes into contact with the second drive roller 250A while applying a predetermined pressure. When the second drive roller 250A is rotationally driven in this state, the second driven roller 250B is driven.

Specifically, one of the two manual feed roller pairs 250 (left side) draws a tip end portion of the sheet Sh1 inserted into the sheet feed port 24 into the manual conveying path 25 and guides the sheet Sh1 to the other manual feed roller pair 250 (right side). The other manual feed roller pair 250 conveys the sheet Sh1 conveyed from the one of the manual feed roller pairs 250 to the pickup roller 29.

As shown in Fig. 2 and Fig. 3, the manual conveying path 25 is provided with a first sensor 71 and a second sensor 72. The first sensor 71 detects a tip end of the sheet Sh1 inserted into the sheet feed port 24. In other words, the first sensor 71 detects whether or not the sheet Sh1 has been inserted into the sheet feed port 24. On the manual conveying path 25, the first sensor 71 is provided more on the downstream side of the conveyance direction D12 than the sheet feed port 24 and more on the upstream side of the conveyance direction D12 than the left-side manual feed roller pair 250.

The first sensor 71 is, for example, a line sensor extending in the front-rear direction D2. The line sensor is constituted of a plurality of image sensors arranged in line along the front-rear direction D2. The first sensor 71 is connected to the control portion 30. The first sensor 71 outputs a detection signal including image data (density data) of a tip end of the sheet Sh1 to the control portion 30. Upon receiving the detection signal from the first sensor 71, the control portion 30 determines whether or not the sheet Sh1 has reached a detection position of the first sensor 71 based on that detection signal.

It is noted that the first sensor 71 may be an optical sensor. The optical sensor includes a light-emitting element and a light-receiving element, receives reflected light of light emitted from the light-emitting element, and outputs a detection signal corresponding to the amount of received light. The control portion 30 may determine whether or not the conveyed sheet Sh1 has reached the detection position of the first sensor 71 based on a change point of the detection signal transmitted from the optical sensor.

The second sensor 72 detects a tip end of the sheet Sh1 conveyed through the manual conveying path 25. On the manual conveying path 25, the second sensor 72 is provided more on the downstream side of the conveying direction D12 than the right-side manual feed roller pair 250 and more on the upstream side of the conveying direction D12 than the pickup roller 29.

The second sensor 72 is connected to the control portion 30. The second sensor 72 outputs a detection signal to the control portion 30. Upon acquiring the detection signal from the second sensor 72, the control portion 30 determines whether or not the sheet Sh1 has reached the detection position of the second sensor 72 based on that detection signal. Similar to the first sensor 71, the second sensor 72 may be a line sensor, or may be an optical sensor.

As shown in Fig. 1, each of the image forming units 4 is provided below the intermediate transfer unit 5. Each of the image forming units 4 performs image forming processing for forming a toner image on a surface of a transfer belt 5A based on image data input from outside. The image forming units 4 are arranged in line along a traveling direction D10 of the transfer belt 5A. The image forming unit 4Y for yellow, the image forming unit 4C for cyan, the image forming unit 4M for magenta, and the image forming unit 4K for black are arranged in the stated order from the left side toward the right side of the transfer belt 5A.

Each of the image forming units 4 includes a photoconductor drum 41, a charging device 42, a developing device 43, a primary transfer roller 44, and the like. The image forming unit 4Y forms a toner image on a surface of the photoconductor drum 41 using yellow toner. The image forming unit 4C forms a toner image on the surface of the photoconductor drum 41 using cyan toner. The image forming unit 4M forms a toner image on the surface of the photoconductor drum 41 using magenta toner. The image forming unit 4K forms a toner image on the surface of the photoconductor drum 41 using black toner. Processing of developing the toner image with respect to the photoconductor drum 41 is performed by the developing device 43.

The intermediate transfer unit 5 includes the transfer belt 5A, a third drive roller 5B, and a third driven roller 5C. The transfer belt 5A is an annular belt member onto which the toner images of the respective colors formed on the photoconductor drums 41 of the image forming units 4 are transferred. The transfer belt 5A is provided above the photoconductor drums 41. The transfer belt 5A is rotatably supported by the third drive roller 5B and the third driven roller 5C that are provided apart from each other in the left-right direction D3. The transfer belt 5A is supported while being stretched across the third drive roller 5B and the third driven roller 5C. When a surface of the transfer belt 5A passes between the photoconductor drums 41 and the primary transfer rollers 44, the toner images are sequentially transferred from the photoconductor drums 41 so as to be superimposed on one another.

As shown in Fig. 2 and Fig. 3, the third drive roller 5B is fixed to a rotation shaft 51 extending in the front-rear direction D2, and this rotation shaft 51 is rotatably supported by the internal frame of the housing 11. A driving force from the motor 9 is transmitted to the rotation shaft 51. The driving force of the motor 9 is transmitted to the rotation shaft 51 via the transmission mechanism 90 such as a gear or a belt.

The laser scanning unit 13 irradiates laser light onto the photoconductor drum 41 of each of the image forming units 4 based on input image data for each color. Thus, an electrostatic latent image is formed on each of the photoconductor drums 41.

As shown in Fig. 2 and Fig. 3, the secondary transfer roller 20 is provided opposed to the third drive roller 5B so as to sandwich the conveying path 26 extending in the up-down direction D1. The secondary transfer roller 20 performs transfer processing for transferring the toner image formed on the transfer belt 5A onto the surface (transfer surface) of the sheet Sh1 by a transfer potential applied to the secondary transfer roller 20. The sheet Sh1 onto which the toner image has been transferred is conveyed to the fixing device 16.

As shown in Fig. 2 and Fig. 3, the fixing device 16 is a portion that heats the toner image transferred onto the sheet Sh1 to fix the toner image onto the sheet Sh1, and includes a heating roller 16A and a pressure roller 16B. The sheet Sh1 conveyed to the fixing device 16 is conveyed while being nipped between the heating roller 16A and the pressure roller 16B. During this conveyance, heat is transmitted from the heating roller 16A to the toner image transferred onto the sheet Sh1, to thus heat the toner image. Thus, the toner image to the surface of the sheet Sh1. After that, the sheet Sh1 is discharged to the sheet tray 18 by the sheet discharge portion 15.

In the present embodiment, the heating roller 16A functions as a drive roller, and the pressure roller 16B functions as a driven roller. Specifically, the heating roller 16A is fixed to a rotation shaft 161 extending in the front-rear direction D2, and this rotation shaft 161 is rotatably supported by the internal frame of the housing 11. A driving force from the motor 9 is transmitted to the rotation shaft 161. The driving force of the motor 9 is transmitted to the rotation shaft 161 via the transmission mechanism 90 such as a gear or a belt.

The pressure roller 16B is biased by a predetermined elastic force toward the heating roller 16A side by a spring (not shown). Specifically, a bearing portion (not shown) that supports a rotation shaft (not shown) of the pressure roller 16B is biased by the spring. Thus, the pressure roller 16B comes into contact with the heating roller 16A while applying a predetermined pressure. When the heating roller 16A is rotationally driven in this state, the pressure roller 16B is driven.

As shown in Fig. 2 and Fig. 3, the sheet correction unit 23 is provided more on the downstream side of the conveying direction D11 than the feed roller pair 22 on the conveying path 26. Specifically, the sheet correction unit 23 is provided between a junction of the conveying path 26 and the double-sided printing conveying path 83 and a fourth sensor 74 (to be described later) on the conveying path 26.

When the conveyed sheet Sh1 is deviated in the front-rear direction D2 (i.e., a width direction of the sheet Sh1), the sheet correction unit 23 returns the sheet Sh1 to a predetermined center position to correct the deviation (lateral deviation). Furthermore, the sheet correction unit 23 conveys the corrected sheet Sh1 to an image transfer device (the third drive roller 5B and the secondary transfer roller 20) located on the downstream side of the conveying direction D11.

Specifically, the sheet correction unit 23 corrects the lateral deviation of the sheet Sh1 in the width direction during a process in which the sheet Sh1 that has entered the sheet correction unit 23 is nipped and conveyed by the registration roller 23A and the driven roller 23B. The correction is performed by moving the sheet Sh1 in the width direction in a direction that corrects the lateral deviation (opposite direction from deviation direction) by a deviation amount of the sheet Sh1 in the width direction. It is noted that a mechanism for moving the sheet Sh1 in the width direction is well known, so descriptions thereof will be omitted herein.

The registration roller 23A is a roller member that is elongated in the front-rear direction D2. The registration roller 23A is fixed to a rotation shaft 231 that extends in the front-rear direction D2, and this rotation shaft 231 is rotatably supported by the internal frame of the housing 11. A driving force from the motor 9 is transmitted to the rotation shaft 231. The driving force of the motor 9 is transmitted to the rotation shaft 231 via the transmission mechanism 90 such as a gear or a belt.

The driven roller 23B is biased by a predetermined elastic force toward the registration roller 23A side by a spring (not shown). Specifically, a bearing portion (not shown) that supports a rotation shaft (not shown) of the driven roller 23B is biased by the spring. Thus, the driven roller 23B comes into contact with the registration roller 23A while applying a predetermined pressure. When the registration roller 23A is rotationally driven in this state, the driven roller 23B is driven.

As shown in Fig. 2 and Fig. 3, the conveying path 26 is provided with a third sensor 73, the fourth sensor 74, a fifth sensor 75, and a sixth sensor 76. The third sensor 73 detects a tip end of the sheet Sh1 that has passed through the feed roller pair 22. On the conveying path 26, the third sensor 73 is provided more on the downstream side of the conveying direction D11 than the feed roller pair 22 and more on the upstream side of the conveying direction D11 than the junction of the conveying path 26 and the double-sided printing conveying path 83.

The third sensor 73 is connected to the control portion 30. The third sensor 73 outputs a detection signal to the control portion 30. Upon acquiring the detection signal from the third sensor 73, the control portion 30 determines whether or not the sheet Sh1 has reached a detection position of the third sensor 73 based on that detection signal. Similar to the first sensor 71, the third sensor 73 may be a line sensor, or may be an optical sensor.

The fourth sensor 74 detects a tip end of the sheet Sh1 that has entered the sheet correction unit 23. On the conveying path 26, the fourth sensor 74 is provided more on the downstream side of the conveying direction D11 than the sheet correction unit 23 and more on the upstream side of the conveying direction D11 than the image transfer device (the third drive roller 5B and the secondary transfer roller 20).

The fourth sensor 74 is connected to the control portion 30. The fourth sensor 74 outputs a detection signal to the control portion 30. Upon acquiring the detection signal from the fourth sensor 74, the control portion 30 determines whether or not the sheet Sh1 has reached a detection position of the fourth sensor 74 based on that detection signal. Similar to the first sensor 71, the fourth sensor 74 may be a line sensor, or may be an optical sensor.

The fifth sensor 75 detects a tip end of the sheet Sh1 that has passed through the image transfer device (the third drive roller 5B and the secondary transfer roller 20). On the conveying path 26, the fifth sensor 75 is provided more on the downstream side of the conveying direction D11 than the image transfer device and more on the upstream side of the conveying direction D11 than the fixing device 16.

The fifth sensor 75 is connected to the control portion 30. The fifth sensor 75 outputs a detection signal to the control portion 30. Upon acquiring the detection signal from the fifth sensor 75, the control portion 30 determines whether or not the sheet Sh1 has reached a detection position of the fifth sensor 75 based on that detection signal. Similar to the first sensor 71, the fifth sensor 75 may be a line sensor, or may be an optical sensor.

The sixth sensor 76 detects a tip end of the sheet Sh1 that has passed through the fixing device 16. On the conveying path 26, the sixth sensor 76 is provided more on the downstream side of the conveying direction D11 than the fixing device 16 and more on the upstream side of the conveying direction D11 than the double-sided printing feed roller pair 82.

The sixth sensor 76 is connected to the control portion 30. The sixth sensor 76 outputs a detection signal to the control portion 30. Upon acquiring the detection signal from the sixth sensor 76, the control portion 30 determines whether or not the sheet Sh1 has reached a detection position of the sixth sensor 76 based on that detection signal. Similar to the first sensor 71, the sixth sensor 76 may be a line sensor, or may be an optical sensor.

The discharge roller pair 81 is provided on the left side of the sheet discharge port 15A in the sheet discharge portion 15. As shown in Fig. 2 and Fig. 3, the discharge roller pair 81 receives a driving force from the motor 9 (see Fig. 4) to convey the sheet Sh1 to the sheet discharge port 15A. Thus, the sheet Sh1 is discharged from the sheet discharge port 15A.

Furthermore, when performing double-sided printing to form images on both surfaces of the sheet Sh1, the discharge roller pair 81 receives a driving force from the motor 9 and draw in the sheet Sh1 discharged from the sheet discharge port 15A. Thus, the sheet Sh1 is conveyed to the double-sided printing conveying path 83.

The double-sided printing conveying path 83 is a guide path that guides the sheet Sh1, that has been conveyed back into the housing 11 by the discharge roller pair 81, back to the sheet correction unit 23. The double-sided printing conveying path 83 curves downwardly from the discharge roller pair 81, then extends downwardly, and reaches the sheet correction unit 23 via the two double-sided printing feed roller pairs 82. The sheet Sh1 that has passed through the double-sided printing conveying path 83 enters the sheet correction unit 23 in a state where a back surface opposite to the front surface on which an image has already been formed opposes the registration roller 23A. Thus, an image can also be formed on the back surface of the sheet Sh1, to enable double-sided printing of the sheet Sh1 to be performed.

The discharge roller pair 81 includes a fourth drive roller 81A that rotates when a driving force from the motor 9 is transmitted thereto, and a fourth driven roller 81B that comes into contact with the fourth drive roller 81A to rotate accordingly.

The fourth drive roller 81A is fixed to a rotation shaft 811 extending in the front-rear direction D2, and this rotation shaft 811 is rotatably supported by the internal frame of the housing 11. A driving force from the motor 9 is transmitted to the rotation shaft 811. The driving force of the motor 9 is transmitted to the rotation shaft 811 via the transmission mechanism 90 such as a gear or a belt.

The fourth driven roller 81B is biased by a predetermined elastic force toward the fourth drive roller 81A side by a spring (not shown). Specifically, a bearing portion (not shown) that supports a rotation shaft (not shown) of the fourth driven roller 81B is biased by the spring. Thus, the fourth driven roller 81B comes into contact with the fourth drive roller 81A while applying a predetermined pressure. When the fourth drive roller 81A is rotationally driven in this state, the fourth driven roller 81B is driven.

As shown in Fig. 2 and Fig. 3, each of the two double-sided printing feed roller pairs 82 receives a driving force from the motor 9 (see Fig. 4) to convey the sheet Sh1, that has been conveyed back into the housing 11, toward the downstream side of the conveying direction D13. Each of the double-sided printing feed roller pairs 82 includes a fifth drive roller 82A that rotates when a driving force from the motor 9 is transmitted thereto, and a fifth driven roller 82B that comes into contact with the fifth drive roller 82A to rotate accordingly.

The fifth drive roller 82A is fixed to a rotation shaft 821 extending in the front-rear direction D2, and this rotation shaft 821 is rotatably supported by the internal frame of the housing 11. A driving force from the motor 9 is transmitted to the rotation shaft 821. The driving force of the motor 9 is transmitted to the rotation shaft 821 via the transmission mechanism 90 such as a gear or a belt.

The fifth driven roller 82B is biased by a predetermined elastic force toward the fifth drive roller 82A side by a spring (not shown). Specifically, a bearing portion (not shown) that supports a rotation shaft (not shown) of the fifth driven roller 82B is biased by the spring. Thus, the fifth driven roller 82B comes into contact with the fifth drive roller 82A while applying a predetermined pressure. When the fifth drive roller 82A is rotationally driven in this state, the fifth driven roller 82B is driven.

The operation display portion 17 is a user interface of the image forming apparatus 10. The operation display portion 17 includes a display portion such as a liquid crystal display that displays various types of information in response to control instructions from the control portion 30, and an operation portion such as an operation key or a touch panel that is used to input various types of information to the control portion 30 in accordance with user operations.

The control portion 30 collectively controls the image forming apparatus 10. The control portion 30 includes a CPU, a ROM (Read Only Memory), and a RAM (Random Access Memory). The CPU is a processor that executes various types of arithmetic processing. The ROM is a non-volatile storage device in which information such as control programs for causing the CPU to execute various types of processing is stored in advance. The RAM is a volatile or non-volatile storage device that is used as a temporary storage memory (working area) for the various types of processing to be executed by the CPU. The CPU executes the various control programs stored in advance in the ROM to collectively control the image forming apparatus 10.

It is noted that the control portion 30 may be a control portion provided separately from a main control portion that collectively controls the image forming apparatus 10. Alternatively, the control portion 30 may be constituted of an electronic circuit such as an integrated circuit (ASIC (Application Specific Integrated Circuit)).

As shown in Fig. 4, the control portion 30 is electrically connected to the motor 9, the first sensor 71, the second sensor 72, the third sensor 73, the fourth sensor 74, the fifth sensor 75, and the sixth sensor 76 via signal lines and the like. The motor 9 is connected to a drive control portion 31 included in the control portion 30, and drive thereof is controlled by receiving control signals from the drive control portion 31.

Incidentally, as the related art, there is known an image forming apparatus in which paper is fed from a sheet feed tray to conveying rollers, and the conveying rollers feed the paper to an image forming portion so that an image is formed on the paper. This image forming apparatus has a function of feeding manually-fed paper inserted into a sheet feed port to the conveying rollers by a manual sheet feed roller.

In the image forming apparatus such as that described in the related art, a drive system for driving the conveying rollers and a drive system for driving the manual feed roller can be driven independently to prevent a collision between paper fed from the sheet feed tray and manually-fed paper. For example, such an image forming apparatus independently includes a motor for driving the conveying rollers and a motor for driving the manual feed roller, and these motors can be driven independently. Therefore, there is a problem that in such an image forming apparatus, a configuration that enables a plurality of motors to be driven independently is required, and thus the configuration of the image forming apparatus becomes complex.

It is noted that in the image forming apparatus as that described in the related art, a configuration that uses the same motor for the motor for driving the conveying rollers and the motor for driving the manual feed roller is also possible. However, this configuration requires, for example, a control member that electromagnetically controls drive of the rollers, such as an electromagnetic clutch or a solenoid, in order to alternatively make a switch between the drive of the conveying rollers and the drive of the manual feed roller. Therefore, also with this configuration, there is a problem that the configuration of the image forming apparatus becomes complex.

In contrast, in the present embodiment, by the configuration described below, it is possible to realize the image forming apparatus 10 capable of simplifying the configuration while having the function of forming an image on manually-fed paper, and a control method for the motor 9.

Specifically, as shown in Fig. 4, the image forming apparatus 10 according to the present embodiment includes a first operating portion 101, a second operating portion 102, the motor 9, the drive control portion 31, and the transmission mechanism 90. In the present embodiment, the drive control portion 31 is realized as one function of the control portion 30, but the drive control portion 31 may alternatively be provided separately from the control portion 30.

As shown in Fig. 2, when the motor 9 rotates in a first rotation direction RD1, the first operating portion 101 performs a first operation of conveying the sheet Sh1 along the conveying path 26 in an image forming process for forming an image on the sheet Sh1. The "image forming process" used herein refers to a process in which an image is formed on the sheet Sh1 fed from the sheet storing portion 27 or the manual conveying path 25 via the sheet correction unit 23, the image transfer device (the third drive roller 5B and the secondary transfer roller 20), and the fixing device 16.

In the present embodiment, the first rotation direction RD1 is a direction in which the motor 9 rotates forward. Further, as shown in Fig. 2, the first rotation direction RD1 is a direction in which the drive roller rotates counterclockwise when viewed from the front. Furthermore, in the present embodiment, the first operating portion 101 includes plurality of drive rollers. Specifically, the first operating portion 101 includes the pickup roller 29, the first drive roller 22A of the feed roller pair 22, the registration roller 23A of the sheet correction unit 23, and the third drive roller 5B of the image transfer device. The first operating portion 101 also includes the heating roller 16A of the fixing device 16 and the fourth drive roller 81A of the discharge roller pair 81.

As shown in Fig. 3, when the motor 9 rotates in a second rotation direction RD2, the second operating portion 102 performs a second operation of conveying the sheet Sh1 inserted by the user through the manual sheet feed port 24 (manually-fed paper) to the conveying path 26.

In the present embodiment, the second rotation direction RD2 is a direction opposite to the first rotation direction RD1, in which the motor 9 rotates backward. Further, as shown in Fig. 3, the second rotation direction RD2 is a direction in which the drive roller rotates clockwise when viewed from the front. Furthermore, in the present embodiment, the second operating portion 102 includes plurality of drive rollers. Specifically, the second operating portion 102 includes the second drive roller 250A of each of the two manual feed roller pairs 250.

Here, in the present embodiment, the image forming apparatus 10 further includes a third operating portion 103 as shown in Fig. 4. When the motor 9 rotates in the second rotation direction RD2, the third operating portion 103 performs a third operation of returning the sheet Sh1 to the conveying path 26 in a double-sided image forming process in which images are formed on both surfaces of the sheet Sh1. The "double-sided image forming process" used herein refers to a process in which the sheet Sh1 discharged from the sheet discharge port 15A is drawn into the housing 11 and guided again to the sheet correction unit 23 via the double-sided printing conveying path 83 in order to form an image on the back surface of the sheet Sh1.

In the present embodiment, the third operating portion 103 includes a plurality of drive rollers. Specifically, the third operating portion 103 includes the fourth drive roller 81A of the discharge roller pair 81 and the fifth drive roller 82A of each of the two double-sided printing feed roller pairs 82. In other words, in the present embodiment, the fourth drive roller 81A of the discharge roller pair 81 has the functions of both the first operating portion 101 and the third operating portion 103.

The motor 9 is, for example, a stepping motor, and imparts a driving force to the plurality of drive rollers. Specifically, the plurality of drive rollers include the pickup roller 29, the first drive roller 22A of the feed roller pair 22, the registration roller 23A of the sheet correction unit 23, and the third drive roller 5B of the image transfer device. The plurality of drive rollers also include the heating roller 16A of the fixing device 16, the fourth drive roller 81A of the discharge roller pair 81, and the second drive roller 250A of each of the two manual feed roller pairs 250. The plurality of drive rollers further include the fifth drive roller 82A of each of the two double-sided printing feed roller pairs 82.

Specifically, the motor 9 is configured to impart a driving force to the rotation shaft of each of the drive rollers via the transmission mechanism 90 such as a gear or a belt. Then, when the motor 9 is driven, the driving force is imparted to all of the drive rollers. Furthermore, the direction of the driving force with respect to all of the drive rollers differs between the case where a drive shaft of the motor 9 rotates in the first rotation direction RD1 (i.e., forward rotation) and the case where the drive shaft of the motor 9 rotates in the second direction RD2 (i.e., reverse rotation).

As described above, the first operating portion 101, the second operating portion 102, and the third operating portion 103 each include a roller that rotates to convey the sheet Sh1 (drive roller) and the transmission mechanism 90 that transmits the driving force of the motor 9 to the roller. The transmission mechanism 90 of the first operating portion 101 includes a limitation mechanism 91.

The limitation mechanism 91 limits the transmission of the driving force of the motor 9 to the rollers when the motor 9 rotates in the second rotation direction RD2. Specifically, the limitation mechanism 91 includes, for example, a one-way clutch. When the motor 9 rotates in the first rotation direction RD1, the one-way clutch is in a state where it is fixed to a shaft (not shown) that transmits the driving force of the motor 9, and thus transmits the driving force generated by the rotation of the shaft to the rollers. Therefore, when the motor 9 rotates in the first rotation direction RD1, the rollers included in the first operating portion 101 rotate. On the other hand, when the motor 9 rotates in the second rotation direction RD2, the one-way clutch is in a state where it is not fixed to the shaft. Therefore, the shaft idles, and the driving force generated by the rotation of the shaft is not transmitted to the rollers. Therefore, when the motor 9 rotates in the second rotation direction RD2, the rollers included in the first operating portion 101 do not rotate.

In response to a control instruction from the control portion 30, the drive control portion 31 drives the motor 9 so as to be capable of making a switch between the rotation in the first rotation direction RD1 (i.e., forward rotation) and the rotation in the second rotation direction RD2 (i.e., reverse rotation). Specifically, upon receiving a control instruction instructing the operation of the first operating portion 101, the drive control portion 31 transmits a control signal for rotating the drive shaft of the motor 9 forward to the motor 9. In this case, as shown in Fig. 2, the drive rollers included in the first operating portion 101 out of the plurality of rollers rotate in the first rotation direction RD1. Furthermore, upon receiving a control instruction instructing the operation of the second operating portion 102, the drive control portion 31 transmits a control signal for reversely rotating the drive shaft of the motor 9 to the motor 9. In this case, as shown in Fig. 3, the drive rollers included in the second operating portion 102 and the third operating portion 103 out of the plurality of rollers rotate in the second rotation direction RD2.

Furthermore, upon receiving a control instruction instructing the operation of the third operating portion 103, the drive control portion 31 transmits a control signal for reversely rotating the drive shaft of the motor 9 to the motor 9. In this case, as shown in Fig. 3, the drive rollers included in the second operating portion 102 and the third operating portion 103 out of the plurality of rollers rotate in the second rotation direction RD2.

In the present embodiment, the control portion 30 is capable of executing at least the following three operations. First, when an execution instruction of the printing function to form an image on one surface of the sheet Sh1 is accepted on the operation display portion 17, the control portion 30 transmits a control instruction that instructs the operation of the first operating portion 101 to the drive control portion 31. Thus, the sheets Sh1 stored in the sheet storing portion 27 are taken out one by one, and an image is formed on the surface of the taken-out sheet Sh1 through the image forming process.

Second, when the first sensor 71 detects the sheet Sh1 (manually-fed paper) inserted into the sheet feed port 24, the control portion 30 transmits a control instruction that instructs the operation of the second operating portion 102 to the drive control portion 31. Thus, the manually-fed paper is drawn into the housing 11 to be supported by the manual feed roller pair 250. In this state, the manually-fed paper will not fall out of the sheet feed port 24 even if the user releases his/her hand from the manually-fed paper.

After that, when an execution instruction of the printing function to form an image on one surface of the manually-fed paper is accepted on the operation display portion 17, the control portion 30 transmits a control instruction that instructs the operation of the second operating portion 102 to the drive control portion 31. Then, when the second sensor 72 detects the manually-fed paper, the control portion 30 then transmits a control instruction that instructs the operation of the first operating portion 101 to the drive control portion 31. Thus, an image is formed on a front surface of the manually-fed paper through the image forming process.

Third, when an execution instruction of the double-sided printing function to form images on both surfaces of the sheet Sh1 is accepted on the operation display portion 17, the control portion 30 transmits a control instruction that instructs the operation of the third operating portion 103 to the drive control portion 31 after the operation of the first operating portion 101. Thus, the sheet Sh1 is drawn in from the sheet discharge port 15A, and the drawn-in sheet Sh1 is conveyed to the sheet correction unit 23 along the double-sided printing conveying path 83. After that, when the fourth sensor 74 detects the sheet Sh1, the control portion 30 then transmits a control instruction that instructs the operation of the first operating portion 101 to the drive control portion 31. Thus, an image is also formed on the back surface of the sheet Sh1 through the double-sided image forming process.

The drive control portion 31 restricts a switch of the rotation direction of the motor 9 while the first operating portion 101 and the second operating portion 102 are operating. Specifically, during the operation of the first operating portion 101, the drive control portion 31 does not switch the rotation direction of the motor 9 even when the control instruction that instructs the operation of the second operating portion 102 is accepted. In other words, while the sheet Sh1 is being conveyed along the conveying path 26, the drive control portion 31 does not impart a driving force in the direction for rotating in the second rotation direction RD2 to any of the drive rollers. Furthermore, during the operation of the second operating portion 102, the drive control portion 31 does not switch the rotation direction of the motor 9 even when the control instruction that instructs the operation of the first operating portion 101 is accepted. In other words, while the sheet Sh1 inserted into the sheet feed port 24 (manually-fed paper) is being drawn in, the drive control portion 31 does not impart a driving force in the direction for rotating in the first rotation direction RD1 to any of the drive rollers. Thus, it is possible to realize both operations of the first operating portion 101 and the second operating portion 102 while preventing a collision between the sheet Sh1 conveyed along the conveying path 26 and the sheet Sh1 inserted into the sheet feed port 24 (manually-fed paper).

Furthermore, the drive control portion 31 does not switch the rotation direction of the motor 9 while the first operating portion 101 and the third operating portion 103 are operating. Specifically, during the operation of the first operating portion 101, the drive control portion 31 does not switch the rotation direction of the motor 9 even when the control instruction that instructs the operation of the third operating portion 103 is accepted. In other words, while the sheet Sh1 is being conveyed along the conveying path 26, the drive control portion 31 does not impart a driving force in the direction for rotating in the second rotation direction RD2 to any of the drive rollers. Furthermore, during the operation of the third operating portion 103, the drive control portion 31 does not switch the rotation direction of the motor 9 even when the control instruction that instructs the operation of the first operating portion 101 is accepted. In other words, while the sheet Sh1 drawn in from the sheet discharge port 15A is being conveyed along the double-sided printing conveying path 83, the drive control portion 31 does not impart a driving force in the direction for rotating in the first rotation direction RD1 to any of the drive rollers. Thus, it is possible to realize both operations of the first operating portion 101 and the third operating portion 103 while preventing a collision between the sheet Sh1 conveyed along the conveying path 26 and the sheet Sh1 conveyed along the double-sided printing conveying path 83.

As described above, the image forming apparatus 10 according to the present embodiment can realize the operation of the first operating portion 101 and the operation of the second operating portion 102 by switching the rotation of the motor 9 between the first rotation direction RD1 and the second rotation direction RD2. In other words, in the present embodiment, the image forming apparatus 10 does not need to include a plurality of motors 9 or include a limitation member such as an electromagnetic clutch or a solenoid, so it is possible to simplify the configuration of the image forming apparatus 10 while retaining the function of forming an image on manually-fed paper. Furthermore, in the present embodiment, simplifying the configuration of the image forming apparatus 10 also makes it possible to reduce manufacturing costs.

Incidentally, in the present embodiment, the drive control portion 31 controls the motor 9 such that a rotation speed of the motor 9 during the operation of the second operating portion 102 becomes equal to or higher than the rotation speed of the motor 9 during the operation of the first operating portion 101. Specifically, in the image forming apparatus 10, a conveying speed of the sheet Sh1 during the image forming process can be changed according to a setting operation on the operation display portion 17. Here, the conveying speed of the sheet Sh1 can be set to either a normal mode in which the conveying speed of the sheet Sh1 is normal, or a half-speed mode in which the conveying speed of the sheet Sh1 is half the normal speed.

When set to the half-speed mode, the drive control portion 31 controls the motor 9 such that the rotation speed of the motor 9 becomes half the normal rotation speed during the operation of the first operating portion 101. Meanwhile, even when set to the half-speed mode, the drive control portion 31 controls the motor 9 such that the rotation speed of the motor 9 becomes the normal rotation speed during the operation of the second operating portion 102. Thus, the sheet Sh1 inserted into the sheet feed port 24 (manually-fed paper) can be drawn into the manual conveying path 25 more quickly than in a case where the motor 9 is rotated at half the normal rotation speed during the operation of the second operating portion 102. Therefore, there is an advantage that a time required for the user to release his/her hand since inserting the manually-fed paper into the sheet feed port 24 can be shortened, making it less bothersome for the user.

### [2] Operation example of image forming apparatus

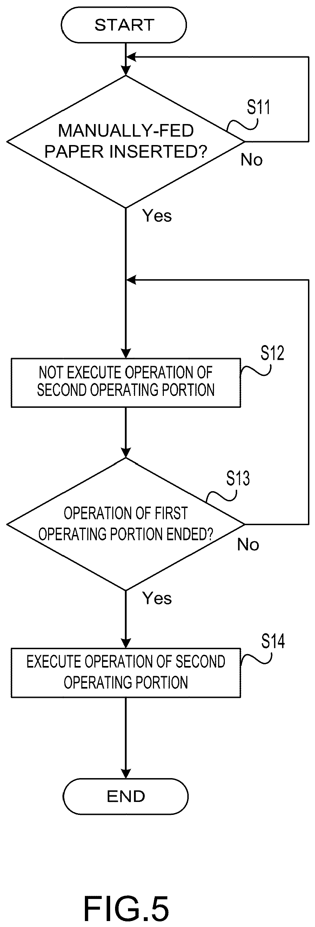

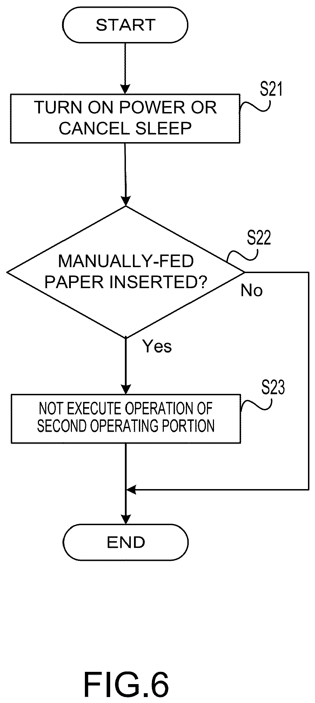

Hereinafter, with reference to Fig. 5 and Fig. 6, an example of the control method for the motor 9 according to the present embodiment will be described along with exemplary procedures of processing executed by the image forming apparatus 10. Here, Step S11, Step S12, ... represent numbers of processing procedures (steps) executed by the image forming apparatus 10.

In a first operation example and a second operation example described below, the drive control portion 31 is restricted from switching the rotation direction of the motor 9 to the second rotation direction RD2 when a specific condition is satisfied. The specific condition differs between the first operation example and the second operation example.

Fig. 5 shows procedures of processing executed by the image forming apparatus 10 in the first operation example. Hereinafter, the first operation example will be described assuming that the first operating portion 101 is being executed.

### <Step S11>

The control portion 30 of the image forming apparatus 10 determines whether or not the sheet Sh1 (manually-fed paper) has been inserted into the sheet feed port 24 based on a detection result of the first sensor 71. When the manually-fed paper has not been inserted into the sheet feed port 24 (Step S11: No), the drive control portion 31 of the image forming apparatus 10 continues the operation of the first operating portion 101 by maintaining the rotation of the motor 9 in the first rotation direction RD1. In this case, when the operation of the first operating portion 101 ends, the operation of the image forming apparatus 10 also ends. The operation of the first operating portion 101 ends when the sheet Sh1 is discharged from the sheet discharge port 15A. On the other hand, when the manually-fed paper has been inserted into the sheet feed port 24 (Step S11: Yes), the drive control portion 31 executes Step S12.

### <Step S12>

The drive control portion 31 continues the operation of the first operating portion 101 by maintaining the rotation of the motor 9 in the first rotation direction RD1. The drive control portion 31 also waits without executing the operation of the second operating portion 102. In other words, when the specific condition in the first operation example is satisfied, the drive control portion 31 controls the motor 9 so that the rotation direction of the motor 9 is not switched to the second rotation direction RD2. This specific condition is a condition that the sensor (first sensor 71) detects that the sheet Sh1 has been inserted into the sheet feed port 24 and that the first operating portion 101 is operating. Thus, it is possible to prevent the sheet Sh1 conveyed in the image forming process from colliding with the manually-fed paper.

### <Step S13>

After that, until the operation of the first operating portion 101 is ended (Step S13: No), the drive control portion 31 executes Step S12. On the other hand, when the operation of the first operating portion 101 is ended (Step S13: Yes), the drive control portion 31 executes Step S14.

### <Step S14>

The drive control portion 31 controls the motor 9 so that the rotation direction of the motor 9 is switched from the first rotation direction RD1 to the second rotation direction RD2. In other words, when the operation of the first operating portion 101 is ended, the drive control portion 31 switches the rotation direction of the motor 9 to the second rotation direction RD2. Thus, the manually-fed paper can be drawn in from the sheet feed port 24 and supported without colliding with the sheet Sh1 conveyed in the image forming process.

Fig. 6 shows procedures of processing executed by the image forming apparatus 10 in the second operation example. Hereinafter, the second operation example will be described assuming that the image forming apparatus 10 is powered off or is in a sleep state. In other words, at the start of the second operation example, the drive control portion 31 is not supplied with operating power and is therefore in a non-operating state.

### <Step S21>

The control portion 30 executes Step S22 when the image forming apparatus 10 is powered on from off or the sleep mode is canceled. In other words, the control portion 30 executes Step S22 when the drive control portion 31 switches from the non-operating state to an operating state.

### <Step S22>

The control portion 30 determines whether or not the sheet Sh1 (manually-fed paper) has been inserted into the sheet feed port 24 based on the detection result of the first sensor 71. When the manually-fed paper has not been inserted into the sheet feed port 24 (Step S22: No), the control portion 30 ends the processing. In other words, in this case, the first operation example ends. On the other hand, when the manually-fed paper has been inserted into the sheet feed port 24 (Step S22: Yes), the drive control portion 31 executes Step S23.

### <Step S23>

The drive control portion 31 waits without executing the operation of the second operating portion 102. That is, when a specific condition in the second operation example is satisfied, the drive control portion 31 controls the motor 9 so that the rotation direction of the motor 9 is not switched to the second rotation direction RD2. The specific condition is that the sensor (first sensor 71) detects that the sheet Sh1 has been inserted into the sheet feed port 24 when the drive control portion 31 is switched from the non-operating state to the operating state. Here, in a state where the manually-fed paper is already drawn in from the sheet feed port 24, the manually-fed paper will gradually move along the manual conveying path 25 each time the image forming apparatus 10 is powered on or each time the sleep mode is canceled. In this regard, by not switching the rotation direction of the motor 9 to the second rotation direction RD2 when the image forming apparatus 10 is powered on or the sleep mode is canceled, it is possible to prevent an unnecessary operation of the second operating portion 102 from being executed.

### [Modified examples]

In the embodiment described above, the relationship between the drive roller and the driven roller in each of the roller pairs may be reversed. For example, in the feed roller pair 22, the first drive roller 22A may be the driven roller, and the first driven roller 22B may be the drive roller. In this case, the first rotation direction RD1 only needs to be a direction in which the roller rotates clockwise when viewed from the front. Also in this case, the second rotation direction RD2 only needs to be a direction in which the roller rotates counterclockwise when viewed from the front.

In the embodiment described above, the two rollers in each of the roller pairs may both be drive rollers. In this case, the two drive rollers rotate in opposite directions, but from the perspective of conveying the sheet Sh1 in one direction, the rotation directions are considered the same. For example, when the two rollers of the feed roller pair 22 are both the drive rollers, from the perspective of conveying the sheet Sh1 in the conveying direction D11, the counterclockwise rotation direction of one drive roller as viewed from the front corresponds to the first rotation direction RD1. Furthermore, from the perspective of conveying the sheet Sh1 in the conveying direction D11, the clockwise rotation direction of the other drive roller as viewed from the front corresponds to the first rotation direction RD1.

In the embodiment described above, the image forming apparatus 10 does not need to include the limitation mechanism 91. In this case, when the motor 9 rotates in the second rotation direction RD2, the drive roller included in the first operating portion 101 rotates in the second rotation direction RD2, but this does not affect the operation of the image forming apparatus 10 unless the sheet Sh1 is present.

In the embodiment described above, the image forming apparatus 10 does not need to have the double-sided printing function. When the image forming apparatus 10 does not have the double-sided printing function, the configuration related to the double-sided printing function is not necessary. Specifically, in this case, the image forming apparatus 10 does not need to include the two double-sided printing feed roller pairs 82 and the double-sided printing conveying path 83.

In the embodiment described above, there is one motor 9, but there may be a plurality of motors 9. In this case, each of the plurality of motors 9 only needs to control the corresponding drive roller(s). For example, when two motors 9 (first motor and second motor) are provided, the first motor may control all drive rollers except for the heating roller 16A of the fixing device 16, and the second motor may control only the heating roller 16A.

In the embodiment described above, the image forming apparatus 10 has the printing function for forming a monochrome image or a color image on the sheet Sh1, but the present disclosure not limited to this. For example, the image forming apparatus 10 may have a printing function for forming only a monochrome image on the sheet Sh1.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (10), comprising:
a motor (9);
a drive control portion (31) which drives the motor (9) so as to be capable of making a switch between a rotation in a first rotation direction (RD1) and a rotation in a second rotation direction (RD2);
a first operating portion (101) which conveys, at a time the motor (9) is rotating in the first rotation direction (RD1), a sheet (Sh1) along a conveying path (26) in an image forming process for forming an image on the sheet (Sh1); and
a second operating portion (102) which conveys, at a time the motor (9) is rotating in the second rotation direction (RD2), the sheet (Sh1) that has been inserted from a manual sheet feed port (24) to the conveying path (26).

2. The image forming apparatus (10) according to claim 1, wherein
the drive control portion (31) is restricted from switching the rotation direction of the motor (9) while the first operating portion (101) and the second operating portion (102) are operating.

3. The image forming apparatus (10) according to claim 1 or 2, wherein
the first operating portion (101) includes
a roller which rotates to convey the sheet (Sh1), and
a transmission mechanism (90) which transmits a driving force of the motor (9) to the roller, and
the transmission mechanism (90) further includes a limitation mechanism (91) which limits the transmission of the driving force of the motor (9) to the roller at the time the motor (9) is rotating in the second rotation direction (RD2).

4. The image forming apparatus (10) according to claim 1 or 2, wherein
when a specific condition is satisfied, the drive control portion (31) is restricted from switching the rotation direction of the motor (9) to the second rotation direction (RD2).

5. The image forming apparatus (10) according to claim 4, further comprising:
a sensor (71) which detects whether or not the sheet (Sh1) has been inserted into the sheet feed port (24), wherein
the specific condition includes the sensor (71) detecting that the sheet (Sh1) has been inserted into the sheet feed port (24) and the first operating portion (101) being in an operating state.

6. The image forming apparatus (10) according to claim 5, wherein
when the operation of the first operating portion (101) is ended, the drive control portion (31) switches the rotation direction of the motor (9) to the second rotation direction (RD2).

7. The image forming apparatus (10) according to claim 4, further comprising:
a sensor (71) which detects whether or not the sheet (Sh1) has been inserted into the sheet feed port (24), wherein
the specific condition includes the sensor (71) detecting that the sheet (Sh1) has been inserted into the sheet feed port (24) when the drive control portion (31) is switched from a non-operating state to an operating state.

8. The image forming apparatus (10) according to claim 1 or 2, further comprising:
a third operating portion (103) which returns, at the time the motor (9) is rotating in the second rotation direction (RD2), the sheet (Sh1) to the conveying path (26) in a double-sided image forming process for forming images on both surfaces of the sheet (Sh1).

9. The image forming apparatus (10) according to claim 1 or 2, wherein
the drive control portion (31) drives the motor (9) such that a rotation speed of the motor (9) during the operation of the second operating portion (102) becomes equal to or higher than the rotation speed of the motor (9) during the operation of the first operating portion (101).

10. A control method for a motor (9), comprising:
driving the motor (9) so as to be capable of making a switch between a rotation in a first rotation direction (RD1) and a rotation in a second rotation direction (RD2);
conveying, at a time the motor (9) is rotating in the first rotation direction (RD1), a sheet (Sh1) along a conveying path (26) in an image forming process for forming an image on the sheet (Sh1); and
conveying, at a time the motor (9) is rotating in the second rotation direction (RD2), the sheet (Sh1) that has been inserted from a manual sheet feed port (24) to the conveying path (26).
